# EUROPÄISCHE PATENTSCHRIFT

(11) **EP 1 068 511 B1**
(45) Veröffentlichungstag und Bekanntmachung des Hinweises auf die Patenterteilung: **03.07.2002**
(21) Anmeldenummer: 99970469.5
(22) Anmeldetag: 06.04.1999
(51) Int. Cl.: G01N 21/55, G01N 33/543

(54) **ANORDNUNG FÜR DIE OBERFLÄCHENPLASMONEN-RESONANZ-SPEKTROSKOPIE**
ARRANGEMENT FOR SURFACE PLASMON RESONANCE SPECTROSCOPY
DISPOSITIF POUR LA SPECTROSCOPIE PAR RESONANCE DES PLASMONS DE SURFACE

(30) Priorität: 02.04.1998 DE 19814811
(43) Veröffentlichungstag der Anmeldung: 17.01.2001
(73) Patentinhaber: INSTITUT FÜR PHYSIKALISCHE HOCHTECHNOLOGIE E.V., 07745 Jena (DE); Analytik Jena GmbH, Analysenmessgeräte und Laboreinrichtungen, 07745 Jena (DE)
(72) Erfinder: HOPPE, Lutz, D-07743 Jena (DE); PFEIFER, Peter, D-07745 Jena (DE); SCHWOTZER, Günter, D-07778 Dorndorf-Steudnitz (DE)
(74) Vertreter: Pfeiffer, Rolf-Gerd, Dipl.-Phys.
(86) Internationale Anmeldenummer: EP9902353
(87) Internationale Veröffentlichungsnummer: WO0022419

(56) Entgegenhaltungen:
- EP-A- 0 286 195
- WO-A-93/25909
- WO-A-95/22754
- DE-A- 19 615 366
- US-A- 5 313 264
- US-A- 5 491 556

## Beschreibung

Die Erfindung betrifft eine Anordnung für die Oberflächenplasmonen-Resonanz-Spektroskopie, die insbesondere zu direkten Untersuchungen der Wechselwirkung zwischen Biomolekülen einsetzbar ist und eine Multikomponentenanalyse ermöglicht.

Es ist eine sehr empfindliche Methode zur Charakterisierung von Grenzflächen bekannt, die als Oberflächenplasmonen-Resonanz-Spektroskopie, üblicherweise als SPR, (Surface Plasmon Resonance) in der Literatur bezeichnet wird. Sie beruht auf der optischen Anregung von Oberflächenplasmonen in dünnen Metallschichten. Die Resonanzbedingungen für die Anregung der Oberflächenplasmonen hängen stark von den optischen Eigenschaften des die Metallschicht umgebenden Dielektrikums ab. Somit ist die Bestimmung von Brechzahl und Schichtdicke dünner dielektrischer Schichten grundsätzlich mit einer hohen Genauigkeit möglich.

Die SPR-Spektroskopie findet zunehmend in der biochemischen Analytik Anwendung, da mit ihr die direkte Untersuchung der Wechselwirkung zwischen Biomolekülen möglich ist (z.B. Antikörper/Antigen-Reaktionen). Dazu wird ein Reaktionspartner (Ligant) auf der Metalloberfläche immobilsiert, der andere Reaktionspartner (Analyt) wird in Lösung über die Oberfläche geleitet.
Die Wechselwirkung ist als Schichtdickenzuwachs direkt nachweisbar, es ist keine Markierung der Reaktionspartner wie z.B. beim Radioimmunoassay (RIA) oder dem Enzymimmunoassay (ELISA) notwendig.
Diese und weitere Methoden nach dem Stand der Technik sind ausführlich von Striebel, Ch.; Brecht, A.; Gauglitz, G. in Biosensors & Bioelectronics 9 (1994), 139-146 beschrieben. Vorliegender Erfindung am nächsten kommt dabei die dort beschriebene SPR-Methode, bei der von einer Lichtleitfaser ausgehendes Licht über einen Kollimator und einen optischen Polarisator auf ein optisches Prisma gelenkt wird, dessen Basisfläche mit einer die SPR ermöglichenden dünnen Silberschicht versehen ist, welche mit einem Chip abgedeckt ist, der mit einem sich senkrecht zur Beleuchtungsrichtung erstreckenden Probendurchflußkanal versehen ist. Das an der Silberschicht entsprechend der jeweiligen Oberflächenbelegungen beeinflußte und reflektierte Licht wird dann über eine Lichtleitfaser einem Diodenarrayspektrometer zugeführt. Eine simultane Multikomponentenanalyse ist mit der dort beschriebenen Anordnung nicht möglich, weil nur ein optischer und nur ein fluidischer Kanal vorsehbar ist.
In WO 97/40366 ist eine Anordnung beschrieben, bei der ein Nachweis von mehreren Proben, die auf einer Substratplatte angeordnet sind, dadurch realisiert wird, daß die von den Proben reflektierten Strahlen gleichzeitig auf einen matrixförmigen Empfänger (CCD-Matrix oder Videokamera) abgebildet werden. Für die Bestimmung der Resonanzwellenlänge werden alle Proben nacheinander mit Licht unterschiedlicher Wellenlänge beleuchtet. Zur Wellenlängenselektion ist eine durchstimmbare Lichtquelle oder ein scannender Monochromator im Sendestrahlengang vorgesehen. Mit der spektralen Messung werden zwar die Nachteile der weiter unten beschriebenen Intensitätsmessung umgangen, jedoch ist dieses Konzept aufgrund der notwendigen Komponenten nur sehr kostenaufwendig und auch nur in einem relativ großen stationären Gerät zu realisieren.

Weiterhin sind nach dem Stand der Technik Anordnungen bekannt, die sich der SPR-Methode bedienen, jedoch nur eine reine Winkeldetektion des total reflektierten Lichtes vorsehen.
So ist aus der Produktbeschreibung der Fa. Biacore AB, Rapsgatan 7, S-75450 Uppsala, Schweden 1996, eine Vorrichtung bekannt, deren Aufbau grundsätzlich der oben beschriebenen Anordnung entspricht, wobei mit konvergenten Lichtstrahlen beleuchtet wird und dem zweiten Linsensystem unmittelbar und in baulicher Einheit ein Diodenarray als detektierendes Element zugeordnet ist. Ein solcher Aufbau bedingt einen relativ großen, mechanisch sehr massiv ausgebildeten Meßkopf, der ausschließlich in einem stationären Gerät zur Anwendung gelangen kann. Weiterhin beschreiben Berger, Ch. E.H. et al in "Surface Plasmon Resonance Multisensing", Anal. Chem. 1998, 70, S. 703-706 eine Anordnung, die zwar eine mehrkanalige Messung ermöglicht, jedoch liegt diesem Meßprinzip eine Intensitätsmessung zugrunde, die mit den bekannten Nachteilen der hohen Anforderungen an die Stabilität der Lichtquelle und der Empfängerelemente verbunden ist, die nur mit einem erheblichen Steuer- und Regelaufwand erzielbar sind. Weiterhin begrenzt die dort beschriebene Anordnung den grundsätzlich zur Verfügung stehenden Winkelbereich, in dem Plasmonen-Resonanzschwingungen detektierbar sind, da nur ein kleiner Winkelbereich durch die dort beschriebene Meßmethode tatsächlich genutzt werden kann. Darüber hinaus weist die dort beschriebene Anordnung, die sich einer Videokamera und -aufzeichnung bedient, einen relativ hohen gerätetechnischen Aufwand auf und eine simultane mehrkanalige Messung ist nicht gegeben, da die Meßergebnisse nur im Nachgang zeitlich aufeinanderfolgend auswertbar sind.
Eine weitere zu dieser Gruppe von Anordnungen gehörige Anordnung wird von Brink, G. et al in "Near infrared surface plasmon resonance in silicon-based sensor", Sensors and Actuators B 24-25, 1995, S. 756-761 beschrieben. Dort wird für den Probenchip ein Siliziumwafer eingesetzt, das mit einer Stufe versehen ist, die unterschiedlich beschichtet ist, wodurch, wenn der Beleuchtungsspot beide Flächen der Stufe erfaßt, zwei Resonanzwinkelbereiche und damit zwei Kanäle detektierbar sind. Selbst wenn dort mehrere Stufen eingesetzt werden würden, wäre die Anzahl der nutzbaren Kanäle grundsätzlich beschränkt durch den Winkelbereich, in dem die SPR-Methode funktioniert. Noch gravierender wäre jedoch der Nachteil, daß durch die unterschiedliche spektrale Lage der Stufen die Empfindlichkeit der Stufen untereinander nicht identisch ist.

Aufgrund der genannten Probleme ist der kommerziell verfügbaren SPR-Meßtechnik bislang eine breite Anwendung versagt geblieben.

Der Erfindung liegt die Aufgabe zugrunde, eine miniaturisierte Anordnung für die Oberflächenplasmonen-Resonanz-Spektroskopie zu schaffen, die als kostengünstige und transportable Einheit ausgebildet ist und mit welcher zugleich eine Multikomponentenanalyse, insbesondere bei der Wechselwirkung zwischen Biomolekülen, durchgeführt werden kann.

Die Aufgabe wird durch die Merkmale des ersten Patentanspruchs gelöst. Vorteilhafte Ausgestaltungen sind durch die nachgeordneten Ansprüche erfaßt.

Im Rahmen der Erfindung wird vermittels eines Kollimators mit einer relativ großen Austrittsöffnung von einer breitbandigen Lichtquelle erzeugtes und über eine Lichtleitfaser dem Kollimator zugeführtes Licht auf ein optisches Prisma geleitet, an dessen Basisfläche eine Probenaufnahmeküvette angeordnet ist, deren Boden mit einer die SPR-Methode ermöglichenden dünnen Metallschicht versehen ist. Es liegt im Rahmen der Erfindung auch die Prismenbasisfläche mit genannter Metallschicht zu versehen, oder vermittels Immersion ein metallbeschichtetes Substrat auf die Prismenbasisfläche aufzulegen. Das Wesen der Erfindung besteht darin, daß zwischen dem Kollimator und der ersten Prismeneintrittsfläche eine mehrfach in unterschiedlichen Positionen schaltbare Blende vorgesehen ist, bei der mit jedem Schaltzustand definierte Bereiche des Bodens der Probenküvette beleuchtet werden und das jeweils beeinflußte reflektierte Licht über einen zweiten Kollimator mit angeschlossener Lichtleitfaser einem Polychromator zugeführt wird, dessen spektrale Signale von einem CCDoder Diodenarray erfaßt und an eine Auswerte- und Steuereinheit weitergeleitet werden, innerhalb derer eine Zuordnung zu den jeweiligen Schaltstellungen der Blende als auch zu einem Signal, das von einem auf der Probenküvette vorgesehenen Referenzkanal gewonnen wird, erfolgt.

Die Erfindung soll nachstehend anhand schematischer Ausführungsbeispiele näher erläutert werden. Es zeigen:
- Fig. 1: einen Aufbau eines SPR-Meßplatzes nach dem Stand der Technik,
- Fig. 2: eine detailliertere Darstellung einer SPR-Anordnung nach vorliegender Erfindung in teilweise perspektivischer Ansicht mit ihren wesentlichen Baugruppen,
- Fig. 3a bis c: schematisch verschiedene Strahlverläufe, die mit vorliegender Anordnung erzielbar sind, in einer Bodenansicht nach Fig. 2,
- Fig. 3d: zur Verdeutlichung zwei mögliche Strahlverläufe nach Fig. 3c in Seitenansicht analog zu Fig. 2,
- Fig. 4: eine prinzipelle mechanische Ausbildungsmöglichkeit einer Ausführung der mehrfach schaltbaren Blende,
- Fig. 5: eine prinzipielle elektrooptische Ausbildungsmöglichkeit einer Ausführung der mehrfach schaltbaren Blende und
- Fig. 6: beispielhaft eine Ausbildungsmöglichkeit der Probenküvette und des Küvettenbodens.

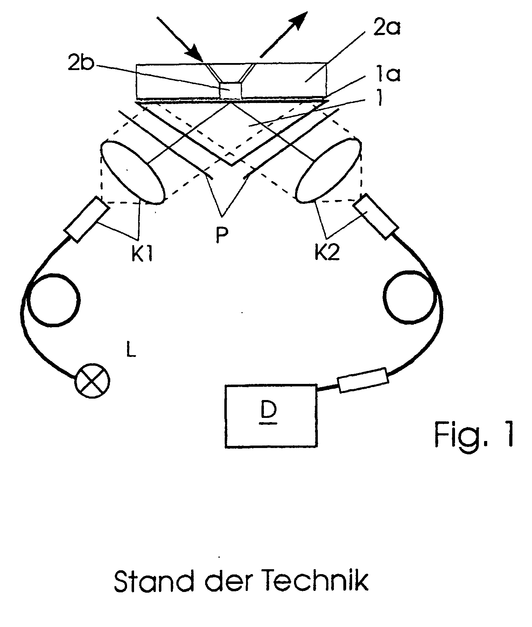

In Figur ist ein Aufbau eines SPR-Meßplatzes nach dem Stand der Technik dargestellt. Von einer Lichtquelle L wird Licht in eine Lichtleitfaser eingekoppelt und über einen ersten Kollimator KI auf ein optisches Prisma 1 gelenkt. Auf das Prisma 1 ist ein Teflonchip 2a aufgesetzt, der eine Flußkammer 2b beinhaltet, die entsprechend der dargestellten Pfeile von der Probenflüssigkeit durchströmbar ist. Der Prismenbasisbereich ist mit einer dünnen Metallschicht 1a versehen, mit der ein Ligant immobilisiert ist. Das von dieser Fläche reflektierte Licht wird spektral durch die Plasmonenwechselwirkungen, je nach Belegungsgrad der immobilisierten Schicht mit dem Analyten, unterschiedlich beeinflußt und von einem zweiten Kollimator K2 erfaßt und einem Diodenarrayspektrometer D zugeführt.
Da Plasmonenschwingungen nur mit bestimmten Polarisationsrichtungen des einfallenden Lichtes anregbar sind, sind optische Polarisatoren P zumindest in einem der bezeichneten Lichtwege nach Fig. 1 vorgesehen. Eine Anregung der Plasmonenschwingungen mit einer definierten linearen Polarisationsrichtung ist bei der weiter unten beschriebenen erfindungsgemäßen Lösung ebenfalls erforderlich, ohne daß darauf näher eingegangen werden muß, da es sich dabei um eine fachübliche Maßnahme handelt. Mit der zu Fig. 1 beschriebenen Anordnung ist zunächst eine nahezu gleichzeitig durchführbare Multikomponentenanalyse nicht möglich. Zum anderen treten beim praktischen Einsatz dieser Affinitätssensoren insofern Probleme auf, als es durch Temperaturschwankungen zu Brechzahländerungen in den zu untersuchenden Medien kommen kann, welche das Meßsignal verfälschen. Weiterhin können trotz der hohen Selektivität, insbesondere von biochemischen Reaktionen, unspezifische Bindungen an der immobilisierten Metalloberfläche zu falschen Meßergebnissen führen.

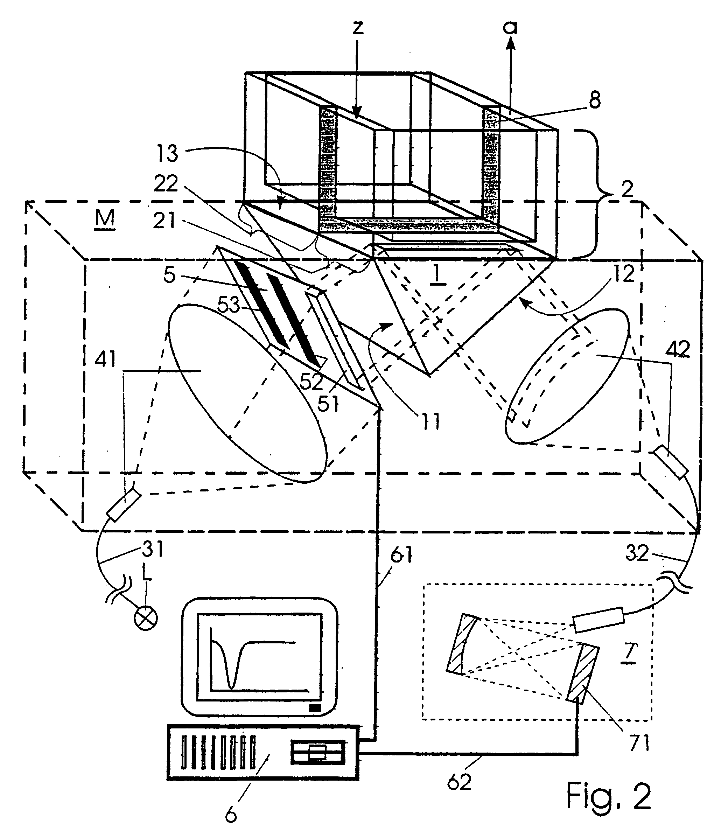

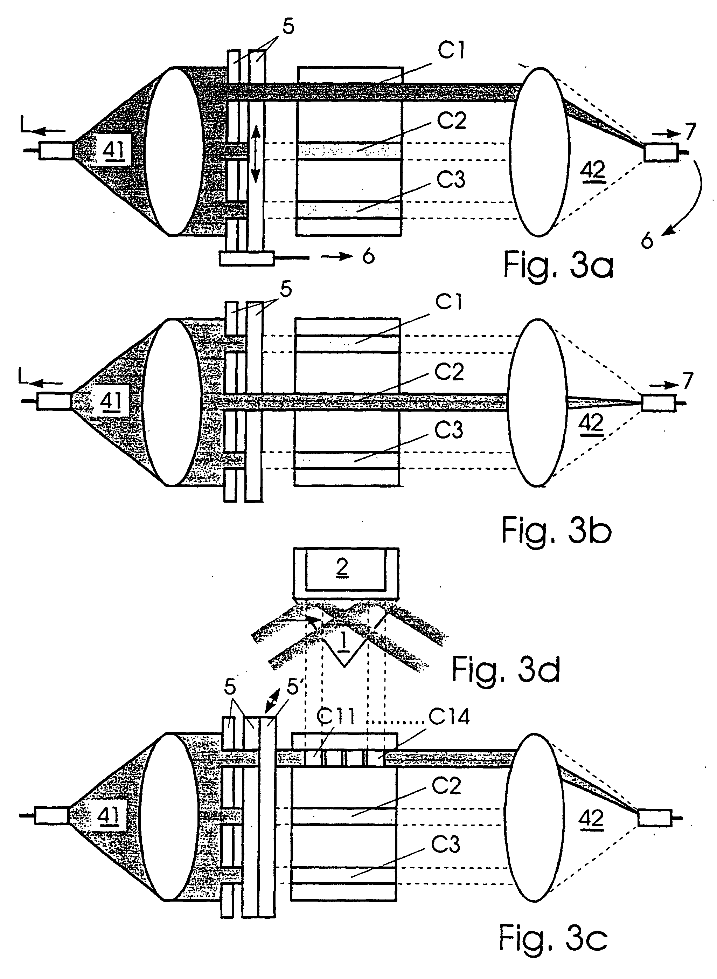

In Figur 2 ist eine detailliertere Darstellung einer SPR-Anordnung nach vorliegender Erfindung in teilweise perspektivischer Ansicht mit ihren wesentlichen Baugruppen dargestellt. Analog zum bekannten Stand der Technik wird Licht, hier einer breitbandigen Lichtquelle L, in eine Lichtleitfaser, vorzugsweise eine Multimoden-Lichtleitfaser, 31 eingekoppelt, einem Kollimator 41 zugeführt und auf die Prismeneintrittsfläche 11 geleitet. Eine besonders bevorzugte Probenküvettenausbildung besteht aus einer Probenküvette 2, die auf die Prismenbasisfläche aufsetzbar ist und deren Innenboden mit genannter dünner Metallschicht versehen ist Andere Küvettengestaltungen und bspw. das Versehen der Prismenbasisfläche mit genannter dünner Metallschicht, wie nach dem Stand der Technik üblich, sind ebenfalls mit der hier vorgeschlagenen Anordnung realisierbar. Das hier vom Boden der Probenküvette 2 reflektierte Licht wird über die Prismenaustrittsfläche 12 von einem zweiten Kollimator 42 erfaßt und über eine Lichtleitfaser 32 einer Auswertung zugeführt. Die Erfindung beinhaltet abweichend vom bekannten Stand der Technik zunächst das Vorsehen einer örtlich mehrfach umschaltbaren Blende 5, die im Beispiel nach Fig. 2 als eine Blende mit drei schaltbaren Spalten 51, 52, 53 dargestellt ist, wobei in Fig. 2 die Spalte 52, 53 geschlossen und der Spalt 51 geöffnet ist. Die jeweiligen Schaltzustände der Blende 5 werden vermittels üblicher und nicht näher dargestellter elektronischer Baugruppen über eine Daten- und Steuerleitung 61 einer Auswerte- und Steuereinheit 6 zugeführt. Weiterhin ist die laterale Ausdehnung der Einzelspalte der Blende 5 so groß festgelegt, daß deren Abbildung die Prismenbasisfläche 13 in einer Erstreckungsrichtung im wesentlichen erfaßt, wie es in Fig. 2 durch die dunkel dargestellte und vom parallelen Licht des ersten Spalts 51 erzeugte Projektionsfläche angedeutet ist. Weiterhin sind in Fig. 2 zwei Probenerfassungsbereiche 21, 22 vorgesehen, die im Beispiel innerhalb der gebildeten doppelten Kammerwandung der Küvette 2, bei der durch den Pfeil z der Probenzufluß und durch Pfeil a der Probenabfluß angedeutet ist, durch eine Wandung 8 räumlich voneinander getrennt sind. Die näheren Möglichkeiten, die diese beispielhafte Trennung nach sich zieht, wird ausführlicher zu den Figuren 3 und 6 erläutert.
Die Aufteilung des von der Lichtquelle L mit Hilfe der Lichtleitfaser 31 übertragenen Lichtes in die vorgesehenen einzelnen, in den Figuren 3 und 6 näher dargestellten Meßkanäle erfolgt im vom Kollimator 41 kollimierten Lichtstrahl mit Hilfe der mehrfach schaltbaren Blende 5.

In den Figuren 3a und 3b sind schematisch verschiedene Strahlverläufe, die mit vorliegender Anordnung erzielbar sind, in einer Bodenansicht nach Fig. 2 dargestellt. Die Auswahl der einzelnen Meßkanäle erfolgt in allen dargestellten Ausführungsbeispielen zeitlich nacheinander durch eine schaltbare Blende, welche auf verschiedene Art ausgeführt sein kann und die jeweils immer nur einen der durch die Blende gebildeten Lichtstreifen durchläßt. Dieser Lichstreifen regt dann im zugeordneten Meßkanal (vgl. Fig. 3a, Kanal C1; Fig. 3b, Kanal C2) auf dem metallbeschichteten Küvettenboden die SPR-Schwingungen an, die entsprechend der z. B. biochemischen Wechselwirkungen spektral beeinflußt und vom Kollimator 42 auf die zweite Lichtleitfaser 32 fokussiert und dem Polychromator 7 zur Auswertung zugeleitet werden. Durch die Auswerte- und Steuereinheit 6 wird die Zuordnung der zeitlich aufeinanderfolgenden Spektren zu den Meßkanälen gewährleistet (Zeitmultiplexing).

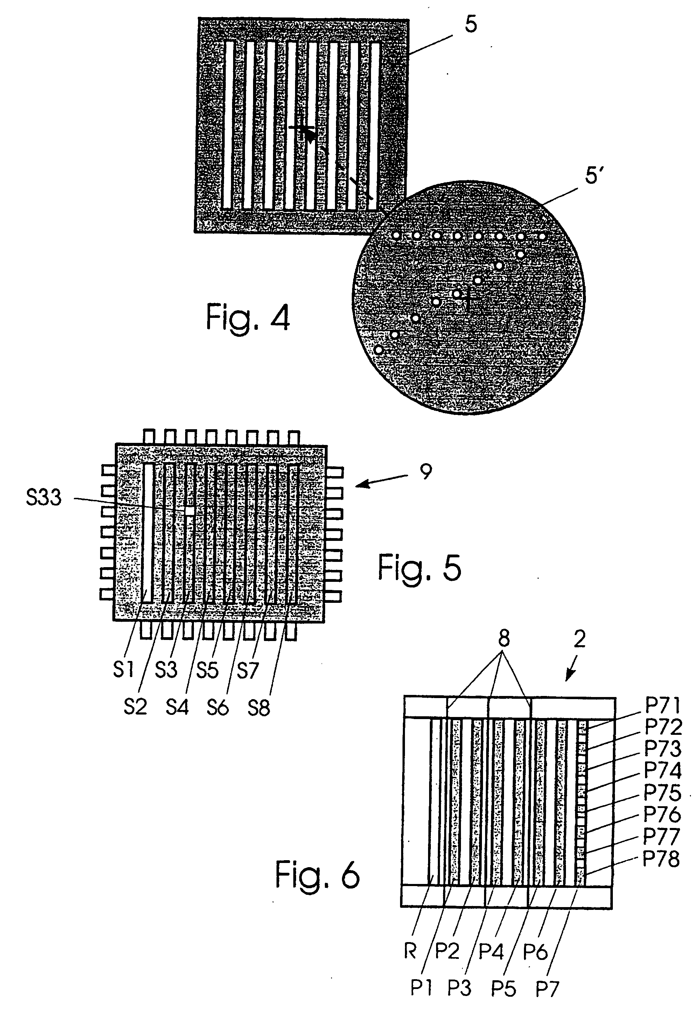

In Figur 3c ist beispielhaft eine weitere Ausgestaltungsmöglichkeit der vorliegenden Anordnung skizziert, bei der durch eine geeignete Blendenausbildung auch mehrere Lichtstreifen nacheinander in einen Kanal, im Beispiel nur anhand des Kanals C1 durch C11 ... C14 angedeutet, abgebildet werden, so daß durch eine unterschiedliche Immobilisierung der einzelnen Meßflächen auch in der dargestellten Richtung eine Mehrkomponentenanalyse durchführbar ist. Eine derartiges ermöglichende Blende ist beispielhaft in Fig. 4 dargestellt, die hier aus einer Mehrfachspaltblende 5 und einer dieser drehbar zugeordneten Mehrfachlochblende 5' besteht. Elektromechanische oder piezoelektrische Antriebe zum definierten präzisen Verstellen solcher denkbaren Blendenausführungen gehören zum bekannten Stand der Technik und bedürfen an dieser Stelle keiner weiteren Ausführung.
Beliebige Abwandlungen des erforderlichen Blendenprinzips zum Betreiben der vorliegenden Anordnungen liegen im Rahmen der Erfindung. So kann für die örtlich mehrfach umschaltbare Blende 5, 5' auch eine Flüssigkristallzelle 9 zum Einsatz gelangen, die zwischen zwei, in Fig. 5 nicht näher dargestellten Polarisatoren eingebracht ist. Solche Bauelemente (vergleichbar einem LCD-Display) sind kommerziell verfügbar. Durch geeignete Form der Elektroden sind beliebige Blendengeometrien in Anpassung an die Probenküvettenbodenausbildung realisierbar. Zugleich steht bei einer solchen Blendenausbildung am Ausgang der Blende 9 für die Anregung der SPR vorteilhaft linear polarisiertes Licht zur Verfügung. Die serielle Schaltung der einzelnen Kanäle erfolgt durch Anlegen der entsprechenden elektrischen Spannungen an transparente Elektroden der Flüssigkristallzelle. Im Beispiel der Fig. 5 ist ein vollständig eröffneter Leuchtspalt S1 und ein nach Verschluß dieses Spaltes eröffenbarer Teilspaltbereich S33 zur Beleuchtung eines Teilprobengebietes Pxy (vgl. Fig. 6) dargestellt.
Da Temperaturschwankungen beim Einsatz der vorgeschlagenen Anordnung unvermeidlich sind, als auch unspezifische Bindungen, wie sie bei der Messung in sehr komplexen Matrizen, wie z.B. Blutplasma oder Auszügen aus Lebensmitteln nicht vollständig auszuschließen sind, an den immobilisierten Oberflächen zu Verfälschungen der Meßergebnisse führen, ist in jedem der dargestellten Ausführungsbeispiele ein frei wählbarer Meßkanal als Referenzkanal reserviert, dessen Verwendung weiter unten beschrieben wird.
In Abhängigkeit von der Meßaufgabe und der konkreten Küvettenausbildung kann der Referenzkanal vielgestaltig ausgeführt sein. So könnte dieser Referenzkanal nach Fig. 2 bspw. der Probenerfassungsbereich 21 sein, der von den eigentlichen Meßkanälen im Probenerfassungsbereich 22 durch die Wandung 8 getrennt ist. Ist eine solche Wandung nicht vorgesehen, kann der Referenzkanal auch durch einen nicht immobilisierten Probenerfassungsbereich gebildet sein und dgl. mehr.
Figur 6 deutet beispielhaft eine Ausbildung von Probenerfassungsbereichen P1 bis P7 an, wobei der Bereich P7 nochmals in Unterbereiche P71 bis P78 unterteilt ist. Zugleich sind in diesem Beispiel drei Wandungen 8 und ein Referenzkanal R vorgesehen. Die konkrete Ausgestaltung der Probenküvette 2 und der Probenerfassungsbereiche richtet sich ausschließlich nach dem jeweiligen Einsatzzweck und -ort der vorgeschlagenen Anordnung. So ist es bspw. möglich, die auswechselbare Probenküvette 2 als Bypass auszubilden, der z.B. in einen Flußreaktor einbindbar ist. Der große Vorteil der vorgeschlagenen Anordnung besteht dabei darin, daß der eigentliche optische Meßkopf M, bestehend aus dem Prisma 1, den Kollimatoren 41 und 42 sowie der mehrfach schaltbaren Blende äußerst klein ausgeführt werden kann und als Handgerät einsetzbar ist, während die übrigen, zur Ansteuerung und Auswertung erforderlichen Baugruppen der Anordnung durch eine variabel festlegbare Länge der Lichtleitfasern 31 und 32 weitab vom eigentlichen Meßort stationierbar sind.

Bei Einsatz der erfindungsgemäßen Anordnung wird grundsätzlich zunächst so vorgegangen, daß zunächst die spektrale Übertragungsfunktion des gesamten Meßsystems aufgenommen und in der Auswerte- und Steuereinheit 6 abgespeichert wird. Dazu wird als eine Möglichkeit zunächst der nicht näher dargestellte Eingangspolarisator so gedreht, daß senkrecht zur Einfallsebene linear polarisiertes Licht analysiert wird. Somit ist keine Anregung von Oberflächenplasmonen möglich. Eine andere Möglichkeit besteht darin, die Probenküvette 2 zunächst mit Luft zu füllen, so daß auch wieder keine Anregung von Oberflächenplasmonen im analysierten Spektralbereich gegeben ist. Damit wäre die Übertragungsfunktion des Systems gewonnen. Die Aufnahme der SPR-Spektren erfolgt in der hier vorgesehenen Anwendung in flüssigen Medien. Bei entsprechendem Design des Meßkopfes M ist die Verwendung der Anordnung jedoch nicht nur auf flüssige Medien beschränkt, ebenso kann in gasförmigen Medien eine Messung auf die gleiche Weise vorgenommen werden. Diese Spektren sind der vorstehend genannten Übertragungsfunktion überlagert. Um ein für die Auswertung vorteilhaftes normiertes SPR-Spektrum zu erhalten, werden nach jeder Einzelmessung die SPR-Spektren, die im Polychromator 7 gewonnen, von einem CCD- oder Diodenarray 71 detektiert und der Auswerteeinheit 6 über eine Datenleitung 62 zugeführt werden, durch die gespeicherte Übertragungsfunktion in der Auswerteeinheit 6 rechnerisch dividiert. Die Bestimmung der gesuchten Resonanzwellenlänge, d.h. der Wellenlänge, bei der das an der Grenzfläche der Probenerfassungsbereiche reflektierte Licht ein Minimum aufweist, erfolgt z.B. durch Anfitten eines Polynoms eines vorgebbaren Grades und Bestimmung des Scheitelpunkts dieses Polynoms.
In der Auswerte- und Steuereinheit 6 werden jeder momentanen Blendenstelle die zugehörigen gewonnenen Spektren nach erfolgter oben beschriebener Normierung zugeordnet. Je nach Meßaufgabe und Reaktionskinetik kann dieser Vorgang beliebig oft wiederholt werden, um die jeweiligen Minima der Resonanzspektren zu ermitteln.
In einem möglichen Beispiel sollen Meß- und Referenzkanal gleichartig immobilisiert sein. Über eine durch eine Wandung 8 zweigeteilte Probenküvette 2 wird im Meßkanal die zu untersuchende Probe mit der nachzuweisenden Substanz über den Probenerfassungsbereich geleitet, gleichzeitig wird im Referenzkanal eine gleichartige Referenzprobe ohne die nachzuweisende Substanz über den weiteren Probenerfassungsbereich geleitet. Damit werden die Signaländerungen im Referenzkanal, verursacht durch unspezifische Bindungen an der Chipoberfläche und durch Brechzahländerungen in Folge von Temperaturänderungen in gleicher Weise erfaßt wie im Meßkanal. In der Auswerteeinheit werden von den jeweiligen Signaländerungen im Meßkanal die Signaländerungen im Referenzkanal abgezogen, wodurch man nur das durch die spezifische Änderungen hervorgerufene Meßsignal erhält.

### Bezugszeichenliste

- 1: - Prisma
- 11: - Prismeneintrittsfläche
- 12: - Prismenaustrittsfläche
- 13: - Prismenbasisfläche
- 1a: - Metallschicht
- 2a: - Teflonchip
- 2b: - Flußkammer
- K1, K2: - Kollimatoren
- D: - Diodenarrayspektrometer
- P: - Polarisator
- L: - Lichtquelle
- 2: - Probenküvette
- 21, 22: - Probenerfassungsbereiche
- 31, 32: - Lichtleitfaser
- 41, 42: - Kollimator
- 5: - schaltbare Blende
- 5': - Mehrfachlochblende
- 51, 52, 53: - Blendenspalte
- 6: - Auswerte- und Steuereinheit
- 61: - Daten- und Steuerleitung
- 62: - Datenleitung
- 7: - Polychromator
- 71: - CCD- oder Diodenarray
- 8: - Wandung
- 9: - Flüssigkristallzelle
- M: - Meßkopf
- a: - Probenabfluß
- z: - Probenzufluß
- C1-C14: - Meßkanäle
- P1-P78: - Probenerfassungsbereiche
- R: - Referenzkanal
- S1-S33: - Leuchtspalte

## Patentansprüche

1. Anordnung für die Oberflächenplasmonen-Resonanz-Spektroskopie (SPR), bestehend aus einem optischen Prisma (1), dem eine Probenküvette (2) zugeordnet ist, wobei die Probenküvette wenigstens zwei Probenerfassungsbereiche (21; 22) aufweist, die Anordnung mit einer für das Verfahren der SPR ausgewählten dünnen Metallschicht versehen ist, von den Probenerfassungsbereichen zumindest einer als oberflächenimmobilisierter Probenerfassungsbereich ausgebildet ist, wobei von einer breitbandigen Lichtquelle (L) ausgehendes Licht über eine Lichtleitfaser (31) der Eintrittsfläche (11) des optischen Prismas (1) durch einen der Prismenbasisfläche (13) in seiner Apertur angepaßten Kollimator (41) kollimiert zugeführt wird, wobei zwischen dem Kollimator (41) und der Eintrittsfläche (11) eine örtlich mehrfach umschaltbare Blende (5, 5'; 9) vorgesehen ist, die zeitlich nacheinander jeweils einen definierten Lichtweg über die Prismenbasisfläche (13) zu einem der Probenerfassungsbereiche freigibt und deren jeweiliger Schaltzustand einer Auswerte- und Steuereinheit (6) über eine Datenund Steuerleitung (61) zuführbar ist, in der der aktuelle Blendenschaltzustand einem jeweils diesem Schaltzustand entsprechenden Spektrum zuordenbar ist, wobei die Spektren erhaltbar sind durch Erfassen des die Prismenaustrittsfläche (12) verlassenden Lichtes mittels eines weiteren, der Prismenbasisfläche (13) in der Apertur angepaßten Kollimators (42), dessen Ausgang mit einer weiteren Lichtleitfaser (32) verbunden ist, und deren Ausgang den Eingang eines Polychromators (7) bildet, innerhalb dessen das spektral zerlegte Licht einem CCD- oder Diodenarray (71) zugeführt wird, dessen Ausgang mit der Auswerte- und Steuereinheit (6) über eine Datenleitung (62) in Verbindung gebracht ist.

2. Anordnung nach Anspruch 1, **dadurch gekennzeichnet, daß** die zum Einsatz gelangenden Kollimatoren (41, 42), das optische Prisma (1) und die örtlich mehrfach umschaltbare Blende (5, 5'; 9) geometrisch zueinander fest angeordnet und in einem Meßkopf (M) integriert sind.

3. Anordnung nach Anspruch 1 oder 2, **dadurch gekennzeichnet, daß** die örtlich mehrfach umschaltbare Blende (5; 5'; 9) so ausgebildet ist, daß sie zumindest zwei spaltartige Öffnungsbereiche aufweist, die alternierend in einen geöffneten oder geschlossenen Zustand versetzbar sind, wobei die Länge der spaltförmigen Öffnungsbereiche so festgelegt ist, daß deren Abbildung die Prismenbasisfläche (13) in einer Erstreckungsrichtung im wesentlichen erfaßt.

4. Anordnung nach einem der Ansprüche 1 bis 3, **dadurch gekennzeichnet, daß** für die örtlich mehrfach umschaltbare Blende eine zwischen zwei optischen Polarisatoren angeordnete Flüssigkristallzelle (9) eingesetzt ist, die durch eine entsprechende Elektrodenausbildung definierte Bereiche für den Lichtdurchtritt in einen geöffneten- oder geschlossenen Zustand versetzen läßt.

5. Anordnung nach einem der Ansprüche 1 bis 3, **dadurch gekennzeichnet, daß** die örtlich mehrfach umschaltbare Blende durch eine Kombination einer Spaltblende (5) mit einer gegen die Spaltblende verdreh- und/oder verschiebbaren Mehrfachlochblende (5') gebildet ist.

6. Anordnung nach Anspruch 1, **dadurch gekennzeichnet, daß** die Probenküvette (2) durch ein auf die Prismenbasisfläche (13) aufsetzbares Behältnis gebildet ist, wobei der Behältnisinnenboden mit der für die SPR ausgewählten dünnen Metallschicht versehen ist.

7. Anordnung nach Anspruch 6, **dadurch gekennzeichnet, daß** die Probenküvette (2) wenigstens einen immobilisierten Probenerfassungsbereich (P) aufweist und wenigstens ein weiterer Probenerfassungsbereich (R) frei von immobilisierten Oberflächenbelegungen gehalten und als Referenzkanal eingesetzt ist.

8. Anordnung nach Anspruch 7, **dadurch gekennzeichnet, daß** die immobilisierten Probenerfassungsbereiche (C1, C2; P1 ... P7) von dem Probenerfassungsbereich (C3; R), der frei von immobilisierten Oberflächenbelegungen ist, räumlich durch eine Wandung (8) getrennt angeordnet sind.

9. Anordnung nach Anspruch 7, **dadurch gekennzeichnet, daß** zumindest ein immobilisierter Probenerfassungsbereich in mehrere unterschiedlich immobilisierte Bereiche (C11 ... C14; P71 ... P78) aufgeteilt ist.

10. Anordnung nach Anspruch 1 oder 7, **dadurch gekennzeichnet, daß** bei einer Anzahl von n streifenförmig erfaßbaren immobilisierten Probenerfassungsbereichen (n + 1) Spalte in der Blende (5) oder einer als Blende wirkenden Baugruppe (9) vorgesehen sind.

## Claims

1. An arrangement for surface plasmon resonance spectroscopy (SPR), comprising an optical prism (1), a sample cell (2) being associated to said prism, said sample cell having at least two sample detection ranges (21; 22); said arrangement being provided with a thin metal layer adapted for the SPR method; at least one of said sample detection ranges being designed as a surface immobilized sample detection range, a broad-band light source (L) for emitting light, said light being directed via a light conducting fiber (31) and through a collimator (41) to the entrance face (11) of said optical prism (1), said collimator (41) having an aperture being adapted to a base face (13) of said prism, said collimator being for collimating said light, and further comprising a locally multifold switchable diaphragm (5, 5'; 9), said diaphragm being provided between said collimator (41) and said entrance face (11), said diaphragm being adapted for passing through in a time sequence one respective defined path of rays via the base face (13) of said prism to one of said sample detection ranges, the switching state of said diaphragm being adapted to be fed into an evaluation and control unit (6) via a data and control line (61), said evaluation and control unit being for associating the actual switching state of said diaphragm to a respective spectrum corresponding to said actual switching state, the spectra being obtainable by detection of the light leaving a prism exit face (12) by way of a further collimator (42), the aperture of said further collimator being matched to said base face (13) of said prism, the exit of said further collimator being connected to a further light conducting fiber (32), the exit of said further light conducting fiber forming the entrance of a polychromator (7), within said polychromator the spectrally decomposed light being fed into a CCD-array and into a diode array, respectively, (71), the exit of said CCD-array and diode array, respectively, being connected to said evaluation and control unit (6) via a data-line (62).

2. An arrangement as claimed in claim 1, **characterized in that** the collimators (41, 42) used, the optical prism (1) and the locally multifold switchable diaphragm (5, 5'; 9) are in a fixed mutual geometric relation and are integrated within a measuring head (M).

3. An arrangement as claimed in claim 1 or 2, **characterized in that** the locally multifold switchable diaphragm (5, 5'; 9) is so designed that it has at least two slit-shaped aperture ranges that are adapted to be alternately set into an open or shut state, whereby the length of said slit-shaped aperture ranges are determined in such a way that the image thereof substantially covers the base face (13) of the prism in one direction of extension.

4. Arrangement as claimed in one of the claims 1 to 3, **characterized in that** a liquid crystal cell (9) arranged between two optical polarizers is used for the locally multifold switchable diaphragm, said liquid crystal cell (9) is adapted to set defined ranges into an open or shut state for the light passage by a respective design of the electrodes.

5. Arrangement as claimed in one of the claims 1 to 3, **characterized in that** the locally multifold switchable diaphragm is formed by a combination of a slit diaphragm (5) and a rotatable multi-hole disk diaphragm (5') that is rotatable and/or displace relative to said slit diaphragm.

6. Arrangement as claimed in claim 1, **characterized in that** the sample cell (2) is formed by a receptacle which can be mounted on the base face (13) of the prism, whereby the inner bottom of the receptacle is provided with the thin metal layer selected for SPR.

7. Arrangement as claimed in claim 6, **characterized in that** the sample cell (2) has at least one immobilized sample detection range (P), and **in that** at least one further sample detection range (R) is kept free from an immobilized surface coverage and is used as reference channel.

8. Arrangement as claimed in claim 7, **characterized in that** the immobilized sample detection ranges (C1, C2; P1...P7) are arranged separated and spaced from said sample detection range (C3; R), which is kept free from an immobilized surface coverage, by a wall (8).

9. Arrangement as claimed in claim 7, **characterized in that** at least one immobilized sample detection range is divided into a plurality of differently immobilized ranges (C11...C14; P71...P78).

10. Arrangement as claimed in claim 1 or 7, **characterized in that** (n+1) slits in the diaphragm (5) or in a unit (9) operative as a diaphragm are provided at a number of n strip-shaped detectable immobilized sample detection ranges.

## Revendications

1. La configuration destinée à la spectroscopie par résonance plasmonique de surface (SPR) comprenant un prisme optique (1) auquel est attribuée une cuvette à épreuve (2), comprenant au moins deux zones de saisie de données (21; 22), la configuration étant pourvue d'une mince couche métallique sélectionnée pour le procédé SPR, et au moins une des zones de saisie faisant office de zone de saisie pour les données de l'épreuve, est **caractérisée en ce que** le faisceau de lumière émis par une source lumineuse (L) à bande large est dirigé à travers un collimateur adapté (41), entre le collimateur (41) et la surface d'incidence de la lumière (11) du prisme optique étant disposé un diaphragme variable, commutable à plusieurs reprises, (5; 5',9) qui, dans des intervalles temporisés, ouvre un chemin de passage bien défini à la lumière pour la diriger sur la surface du fond du prisme (13) et vers une des zones de saisie des données de l'épreuve dont l'état de commutation du diaphragme étant transmis par l'intermédiaire d'un bus de données et de commande (61) à l'unité de traitement et exploitation des données et de commande (6) où l'état actuel de commutation du diaphragme est attribué au spectre correspondant, les spectres étant obtenus par la saisie du faisceau de lumière au moment de sortir de la surface du prisme (12), à l'aide d'un autre collimateur (42) adapté à l'interface du fond du prisme, dont la sortie est reliée à une autre fibre optique (32), la sortie de laquelle faisant en même temps office d'entrée dans un polychromateur (7) au sein duquel la lumière ayant subi une diffraction arrive au CCD-array ou à la diode-array (71) dont la sortie étant reliée par un bus de données (62) à l'unité de traitement et exploitation de données et de commande (6).

2. La configuration selon la revendication 1 est **caractérisée en ce que** les collimateurs utilisés (41,42), le prisme optique (1) et le diaphragme variable, commutable à plusieurs reprises,(5,5',9) solidairement reliés entre eux, sont intégrés dans une tête de mesure (M).

3. La configuration selon la revendication 1 ou 2 est **caractérisée en ce que** le diaphragme variable, commutable à plusieurs reprises, (5, 5', 9) est conçu de sorte qu'il présente au moins deux ouvertures en forme de fentes qui s'ouvrent ou se ferment alternativement, la longueur des ouvertures étant définie de sorte que l'image qu'elles produisent couvre dans une direction, une partie essentielle de la surface du fond du prisme (13).

4. La configuration selon les revendications 1 à 3 est **caractérisée en ce qu'**une cellule à cristaux liquides (9) disposée entre deux polariseurs optiques est utilisé pour le diaphragme variable, commutable à plusieurs reprises, pour mettre des zones définies de passage de la lumière en état fermé ou ouvert grâce à une conception spécifique des électrodes.

5. La configuration selon les revendications 1 à 3 est **caractérisée en ce que** le diaphragme variable, commutable à plusieurs reprises, est un ensemble combiné comprenant un diaphragme à fentes (5) et un diaphragme à plusieurs trous (5') en position tordue et/ou décalée par rapport au diaphragme à fentes.

6. La configuration selon la revendication 1 est **caractérisée en ce que** la cuvette à épreuve (2) est constituée d'un récipient monté sur la surface de fond du prisme (13), le fond intérieur étant couvert d'un mince film métallique propre au SRP.

7. La configuration selon la revendication 6 est **caractérisée en ce que** la cuvette à épreuve (2) présente au moins une zone immobilisée de saisie des données de l'épreuve (P) et qu'au moins une autre zone de saisie ( R ) étant exempte d'une attribution immobilisée et peut faire fonction de canal de référence.

8. La configuration selon la revendication 7 est **caractérisée en ce que** les zones immobilisées de saisie des données de l'épreuve ( C1, C2; P1 ...P7) et la zone de référence non immobilisée (C3; R) sont séparées par une paroi (8).

9. La configuration selon la revendication 7 est **caractérisé en ce qu'**au moins une zone de saisie immobilisée est subdivisée en plusieurs zones à immobilisations différentes ( C11 ... C14; P71 .... P78).

10. La configuration selon les revendications 1 ou 7 est **caractérisée en ce que** pour un nombre de n zones immobilisées de saisie de données en forme de bandes, (n+1) fentes sont prévues sur le diaphragme (5) ou sur un ensemble (9) faisant fonction de diaphragme.
